(19)

**Europäisches Patentamt**
**European Patent Office**
**Office européen des brevets**

(11) **EP 4 538 786 A1**

(12) **EUROPEAN PATENT APPLICATION**

(43) Date of publication:
16.04.2025 Bulletin 2025/16

(21) Application number: 23202487.7

(22) Date of filing: 09.10.2023

(51) International Patent Classification (IPC):
*G02F 1/35* (2006.01)   *G02F 1/365* (2006.01)

(52) Cooperative Patent Classification (CPC):
G02F 1/365; G02F 1/3528

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **ASML Netherlands B.V.**
**5500 AH Veldhoven (NL)**

(72) Inventors:
• **KARPATE, Tanvi**
  **5500 AH Veldhoven (NL)**
• **ABDOLVAND, Amirnl**
  **5500 AH Veldhoven (NL)**
• **TRAVERS, John, Colin**
  **Edinburgh (GB)**

(74) Representative: **ASML Netherlands B.V.**
**Corporate Intellectual Property**
**P.O. Box 324**
**5500 AH Veldhoven (NL)**

(54) **BROADBAND LIGHT SOURCE ASSEMBLY**

(57)     A broadband light source assembly comprising: a femtosecond pump laser arranged to emit pulses of radiation, wherein the pulses of radiation have an energy per pump pulse of greater than 50 nJ; and an all-normal dispersion optical fiber arranged to receive the pulses of radiation.

FIG. 7

EP 4 538 786 A1

**Description**

FIELD

The present invention relates to a broadband light source assembly. In particular, a broadband light source assembly comprising a femtosecond pump laser and an all-normal dispersion optical fiber.

BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-$k_1$ lithography may be used to process features with dimensions smaller than the classical resolution limit of a lithographic apparatus. In such process, the resolution formula may be expressed as CD = $k_1 \times \lambda$/NA, where $\lambda$ is the wavelength of radiation employed, NA is the numerical aperture of the projection optics in the lithographic apparatus, CD is the "critical dimension" (generally the smallest feature size printed, but in this case half-pitch) and $k_1$ is an empirical resolution factor. In general, the smaller $k_1$ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

In the field of lithography, many measurement systems may be used, both within a lithographic apparatus and external to a lithographic apparatus. Generally, such a measurement system may use a radiation source to irradiate a target with radiation, and a detection system operable to measure at least one property of a portion of the incident radiation that scatters from the target. An example of a measurement system that is external to a lithographic apparatus is an inspection apparatus or a metrology apparatus, which may be used to determine properties of a pattern previously projected onto a substrate by the lithographic apparatus. Such an external inspection apparatus may, for example, comprise a scatterometer. Examples of measurement systems that may be provided within a lithographic apparatus include: a topography measurement system (also known as a level sensor); a position measurement system (for example an interferometric device) for determining position of a reticle or wafer stage; and an alignment sensor for determining a position of an alignment mark. These measurement devices may use electromagnetic radiation to perform the measurement.

Different types of radiation may be used to interrogate different types of properties of a pattern. Some measurement systems may use a broadband light source assembly. Such a broadband light source assembly may be a supercontinuum light source assembly and may comprise an optical fiber through which a pulsed pump radiation beam is propagated to broaden a spectrum of the radiation. Spectral broadening of the input radiation may be dominated by modulation instability, self-phase modulation, or soliton dynamics.

SUMMARY

The inventors have identified that known broadband light source assemblies suffer from levels of relative intensity noise (RIN) of the white light generated which makes them unsuitable for certain applications. For example, for a known broadband light source assembly that generates white light using a whitelight generation process which is based on modulational instability (MI), the RIN of the white light may be too high to achieve the required on-product overlay (OPO) e.g. to achieve an OPO of 1 nm and less.

According to one aspect of the present invention there is provided broadband light source assembly comprising: a femtosecond pump laser arranged to emit pulses of radiation, wherein the pulses of radiation have an energy per pump pulse of greater than 50 nJ; and an all-normal dispersion optical fiber arranged to receive the pulses of radiation.

The broadband light source assembly advantageously provides for full conversion of the pulses of radiation into broadband radiation so that no residual spectral spike from the pump remains in the output spectrum.

Furthermore, the radiation generated by broadband light source assembly (i.e. output by the optical fiber) has lower levels of relative intensity noise (RIN) than known light source assemblies which are based on solitonic and modulation instability (MI) seeded processes. In particular, the broadband light source assembly may generate radiation having RIN < $10^{-5}$ [$Hz^{-1/2}$].

The optical fiber may comprise: a core region; and a cladding region surrounding the core region; wherein the core region and the cladding region comprise a material having a first refractive index, the cladding region additionally comprising a plurality of microstructures extending from an input end of the optical fiber along a longitudinal axis of the optical fiber to an output end of the optical fiber, the plurality of microstructures (i) arranged in a cross-sectional pattern comprising at least one ring of microstructures surrounding the core region, and (ii) having a second refractive index which is less than the first refractive index.

The plurality of microstructures may be hollow. The plurality of microstructures may be air-filled. The broadband light source assembly advantageously does not require that the optical fiber is enclosed in a reservoir (otherwise termed a housing, container or gas cell) comprising a gas. The absence of any gas-related components reduces the size and complexity of the assembly. The reduced size of the broadband light source assembly means that it is easily integratable into a suitable apparatus (e.g. a sensor).

A ratio between a diameter of each of the microstructures and a pitch of the microstructures may be in a range of 0.33-0.45, optionally in a range of 0.36-0.42.

The cross-sectional pattern may comprise a plurality of rings of microstructures surrounding the core region.

The cross-sectional pattern may comprise at least three rings of microstructures surrounding the core region, optionally at least four rings of microstructures surrounding the core region, optionally at least five rings of microstructures surrounding the core region.

A ring of microstructures immediately adjacent to the core region may have six microstructures.

Each of the at least one ring of microstructures may have a hexagonal shape.

The core region may have a diameter less than or equal to 3 $\mu$m.

A length of the optical fiber may be less than 10cm, optionally less than 5cm. This advantageously minimizes the loss in the optical fiber and reduces the issues associated with an optical fiber arising due to bending or stretching of the optical fiber. The short fiber length also advantageously makes the broadband light source assembly highly integratable into a suitable apparatus (it can be positioned in a vertical or horizontal direction as per sensor requirements).

The pulses of radiation may have an energy per pump pulse of at least 75 nJ, optionally at least 100 nJ.

The pulses of radiation comprises radiation may have a central pump wavelength in a range of 700-1800 nm.

The pulses of radiation may have a peak power of at least 200kW, optionally at least 300kW, optionally at least 400kW, optionally at least 500kW, optionally at least 600kW.

The optical fiber may generate broadband radiation in a wavelength range of 500-900 nm, optionally in a wavelength range of 500-1200 nm, optionally in a wavelength range of 500-1500 nm, optionally in wavelength range of 500-1800 nm, optionally in wavelength range of 485-1800 nm.

The broadband radiation may have a power spectral density of at least 3 mW/nm in a wavelength band of 500-900 nm. Thus the broadband light source assembly advantageously achieves a higher power spectral density than known light source assemblies based on soliton self compression.

The optical fiber may have a dispersion value, at a minimum dispersion wavelength, between -1 ps/(nm*km) and -100 ps/(nm*km).

The material having the first refractive index may comprise silica.

The pulses of radiation may have a pulse duration in a range of 10-500 fs.

According to another aspect of the present invention there is provided a lithographic apparatus comprising the broadband light source assembly according to any of the embodiments described herein.

According to another aspect of the present invention there is provided a metrology apparatus comprising the broadband light source assembly according to any of the embodiments described herein.

According to another aspect of the present invention there is provided a holographic metrology apparatus comprising the photonic crystal fiber according to any of the embodiments described herein.

According to another aspect of the present invention there is provided a method for generating broadband radiation, the method comprising: providing pulses of radiation emitted from a femtosecond pump laser to an all-normal dispersion optical fiber, wherein the pulses of radiation have an energy per pump pulse of greater than 50 nJ, the optical fiber outputting the broadband radiation.

## BRIEF DESCRIPTION OF THE DRAWINGS

Embodiments of the invention will now be described, by way of example only, with reference to the accompanying schematic drawings, in which:

- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometry metrology tool used as a metrology device

- Figure 5 depicts a schematic overview of a level sensor metrology tool;

- Figure 6 depicts a schematic overview of an alignment sensor metrology tool;

- Figure 7 depicts a schematic overview of a broadband light source assembly;

- Figure 8 depicts a transverse cross section of an optical fiber used in the broadband light source assembly to illustrate dimensions of the optical fiber;

- Figures 9a-c illustrate how the diameter of a core region of the optical fiber may be measured;

- Figure 10 depicts an example all-normal dispersion profile of the optical fiber;

- Figure 11 depicts spectrally broadened plots of white light generated at different cross-section of fiber lengths highlighting the evolution mechanisms of white light generated by the optical fiber; and

- Figure 12 depicts a power spectral density plot of radiation generated by the broadband light source assembly.

## DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

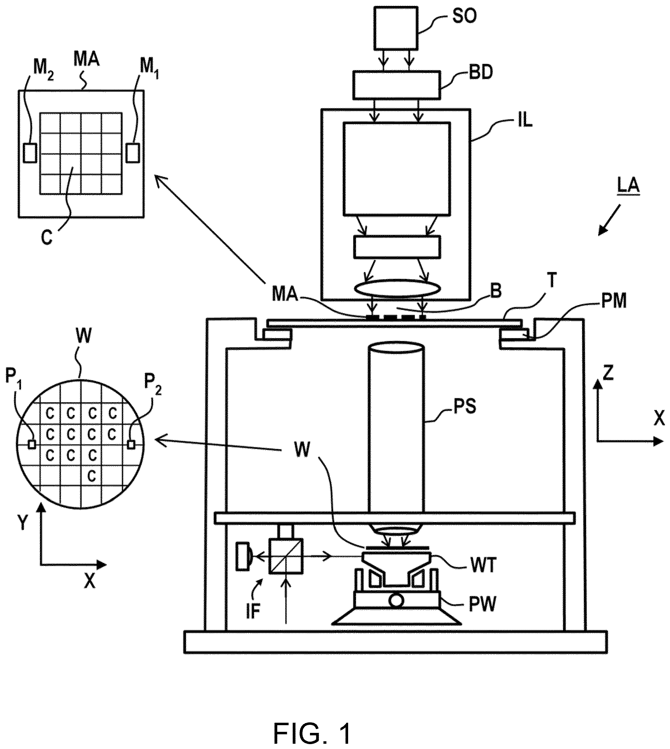

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

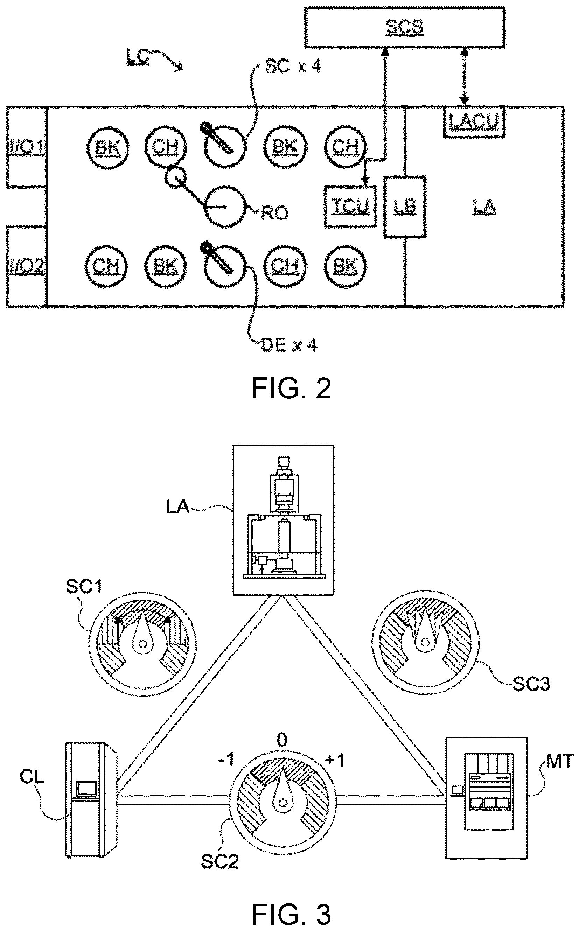

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT.

Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is a ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

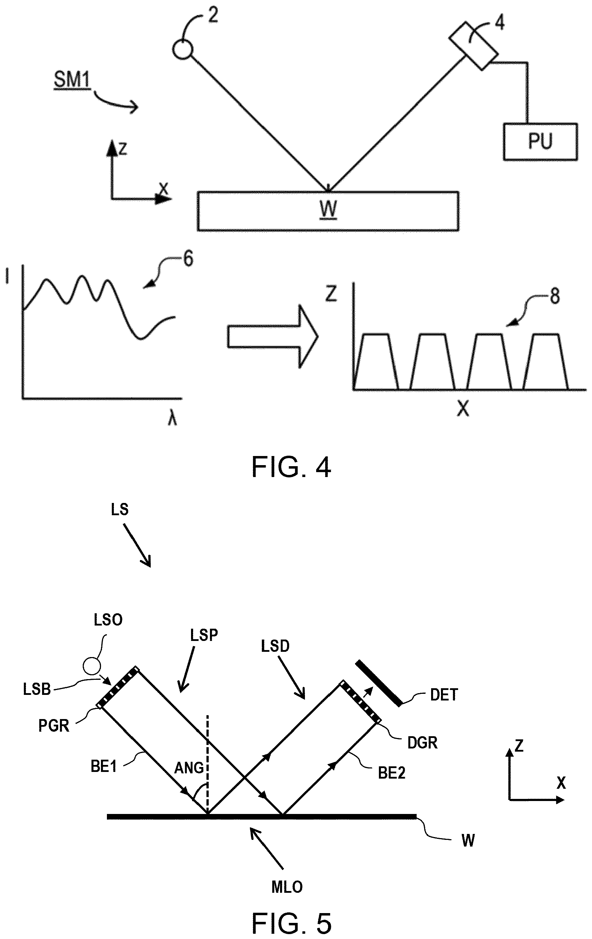

A metrology apparatus, such as a scatterometer, is depicted in Figure 4. It comprises a broadband (white light) radiation projector 2 which projects radiation onto a substrate W. The reflected or scattered radiation is passed to a spectrometer detector 4, which measures a spectrum 6 (i.e. a measurement of intensity as a function of wavelength) of the specular reflected radiation. From this data, the structure or profile 8 giving rise to the detected spectrum may be reconstructed by processing unit PU, e.g. by Rigorous Coupled Wave Analysis and non-linear regression or by comparison with a library of simulated spectra as shown at the bottom of Figure 3. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

Overall measurement quality of a lithographic parameter via measurement of a metrology target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1 incorporated herein by reference in its entirety.

Another type of metrology tool used in IC manufacture is a topography measurement system, level sensor or height sensor. Such a tool may be integrated in the lithographic apparatus, for measuring a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband light source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

Another type of metrology tool used in IC manufacture is an alignment sensor. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks or targets. Each mark is a structure whose position can be measured at a later time using a position sensor, typically an optical position sensor. The position sensor may be referred to as "alignment sensor" and marks may be referred to as "alignment marks".

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

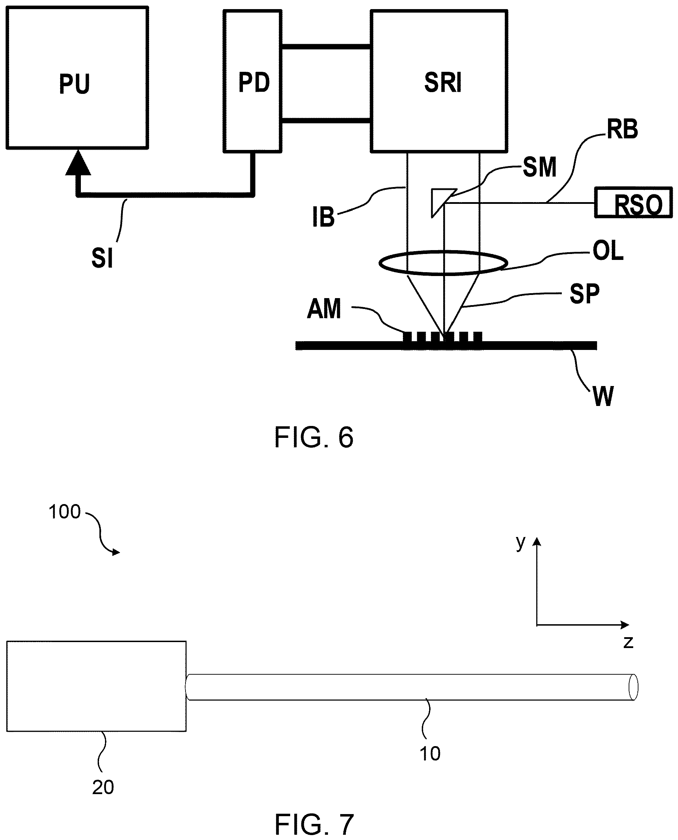

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the alignment mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and demultiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Figure 7 illustrates a broadband light source assembly 100 according to embodiments of the present disclosure. The broadband light source assembly 100 may be employed in any of the apparatuses described above. As shown in Figure 7, the broadband light source assembly 100 comprises a femtosecond pump laser 20 and an all-normal dispersion optical fiber 10. The femtosecond pump laser 20 is arranged to emit pulses of radiation. The optical fiber 10 is coupled to the femtosecond pump laser 20 such that it is arranged to receive the pulses of radiation emitted by the femtosecond pump laser 20 at an input end of the optical fiber 10.

The femtosecond pump laser 20 may be configured to emit pulses of radiation having an energy per pump pulse of greater than 1 nJ. Preferably, the femtosecond pump laser 20 is configured to emit pulses of radiation having an energy per pump pulse of greater than 50 nJ. For example, femtosecond pump laser 20 may be configured to emit pulses of radiation having an energy per pump pulse of greater than 50 nJ, greater than 60 nJ, greater than 70 nJ, greater than 75 nJ, greater than 80 nJ, greater than 90 nJ, or greater than 100 nJ. The femtosecond pump laser 20 may be configured to emit pulses of radiation having an energy per pump pulse of up to 500 nJ.

The pulses of radiation may have a peak power (i.e. the maximum optical power that that a pulse will attain) of at least 200kW, optionally at least 300kW, optionally at least 400kW, optionally at least 500kW, optionally at least 600kW, optionally at least 625kW.

Given the known relationship whereby the peak power of a laser beam is the energy in each pulse divided by the duration of the pulses (also known as pulse width), the pulses of radiation emitted by the femtosecond pump laser 20 may have a pulse duration of at least 10 fs. The pulses of radiation emitted by the femtosecond pump laser 20 may have a pulse duration of less than 500 fs. That is, the pulses of radiation emitted by the femtosecond pump laser 20 may have a pulse duration in a range of 10-500 fs. The pulses of radiation emitted by the femtosecond pump laser 20 may have a pulse duration of at least 100 fs. The pulses of radiation emitted by the femtosecond pump laser 20 may have a pulse duration in a range of 125-175 fs, optionally in a range of 130-170 fs, optionally in a range of 140-160 fs.

The pulses of radiation emitted by the femtosecond pump laser 20 have a natural full-width half-maxima (FWHM). The FWHM can for example be in a range from 2 nm-100 nm. The pulses of radiation may have a central pump wavelength in the range of 700-1800 nm. In one example, the central pump wavelength of the radiation pulses is 800 nm, in another example the central pump wavelength of the radiation pulses is 1027 nm, in yet another example the central pump wavelength of the radiation pulses is 1064 nm.

The pulses of radiation emitted by the femtosecond pump laser 20 may have a pulse repetition rate in a range from 1 MHz - 10 GHz. The pulses of radiation emitted by the femtosecond pump laser 20 may have a pulse repetition rate in a range from 1 - 100 MHz, optionally in a range of 10 - 90 MHz, optionally in a range of 20 - 80 MHz, optionally in a range of 30 - 70 MHz. For example the pulse repetition rate may be 40 MHz.

The optical fiber 10 is an all-normal dispersion optical fiber. That is, the all-normal dispersion optical fiber 10 has a flattened convex profile of normal group velocity dispersion (GVD) with a distinct point where the dispersion is closest to zero at a minimum dispersion wavelength (MDW), but exhibits no zero dispersion wavelength (ZDW) in the region of interest. Preferably, the central pump wavelength of the radiation pulses is within +/- 50 nm around the MDW to maximize the spectral broadening of the radiation input into the optical fiber 10.

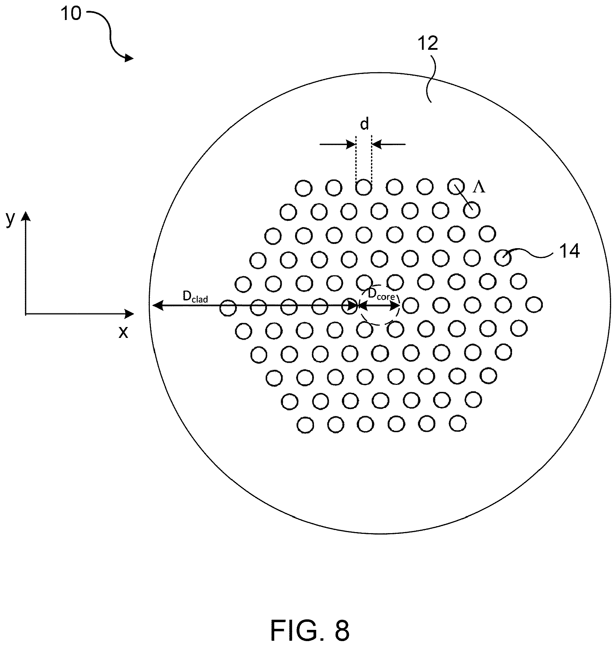

As shown in Figure 8, the optical fiber 10 may include a core region and a cladding region surrounding the core region. Both the core region and the cladding region comprise a background material 12 having a first refractive index ($n_B$). The cladding region additionally comprises a plurality of microstructures 14 (otherwise termed inclusions) extending from an input end of the optical fiber 10 along a longitudinal axis (in the z-direction) of the fiber to an output end of the optical fiber 10. The plurality of microstructures have a second refractive index ($n_{inc}$) where $n_{inc} < n_B$.

The background material 12 may comprise silica. As shown in Figure 8, the optical fiber 10 may be a solid-core fiber (whereby the background material 12 fills the core region).

In some embodiments, the plurality of microstructures 14 are hollow. In some embodiments, the hollow microstructures 14 comprise air. In other embodiments, the plurality of microstructures 14 comprise a vacuum. In yet further embodiments, the plurality of microstructures 14 comprise a medium having the second refractive index ($n_{inc}$). This medium may be a solid material such as doped silica. The doping material may for example be Fluorine (F), Germanium (Ge), and/or phosphorus (P). In embodiments whereby the doped silica comprises silica doped with fluorine, the mole percentage of the fluorine may for example be in a range of 1-10%, such as in a range of 3-8%.

As shown in Figure 8, the plurality of microstructures 14 in the cladding region are arranged in a cross-sectional pattern comprising at least one ring of microstructures surrounding the core region. In the context of the present application, the phrase "ring of microstructures" refers to the cladding microstructures typically having substantially equal radial distance to the core and being aligned in a ring configuration surrounding the core. A ring of microstructures may not be fully circular. As shown in Figure 8, a ring of microstructures may be arranged in a hexagonal shape (or other shape with a number of soft angles). It will be appreciated that this is merely an example and a ring of microstructures may be arranged in a circular or elliptical shape.

In some embodiments, all the microstructures 14 of a ring of microstructures are of substantially the same size and shape (as shown in Figure 8) however it will be appreciated that one or more of the microstructures 14 may be sized differently and/or have a different cross-sectional shape than the remaining microstructures.

Whilst Figure 8 shows the optical fiber 10 having five rings of microstructures 14 it will be appreciated that this is merely an example. In some embodiments, there is only a single ring of microstructures. In other embodiments, there are multiple rings of microstructures for example at least two rings, such as at least three rings, such as at least four rings, such as at least five rings of microstructures 14.

As shown in Figure 8, each microstructure has a diameter (d), and a pitch Λ of the microstructures is defined as the center-to-center distance between neighboring microstructures.

A contributing factor to the optical properties of the optical fiber 10 is the normalized inclusion diameter (d/Λ) which corresponds to a ratio of the diameter (d) of each of the microstructures and the pitch Λ of the microstructures. The normalized inclusion diameter (d/Λ) may be in a range of 0.33-0.45, optionally in a range of 0.36-0.42. For example, the normalized inclusion diameter (d/Λ) may be 0.39.

As shown in Figure 8, the ring of microstructures which is closest to (i.e. immediately adjacent to) the core region may have six microstructures. The diameter of the core region is shown in Figure 8 as $D_{core}$.

The ring of microstructures which is closest to (i.e. immediately adjacent to) the core region having six microstructures is merely an example and embodiments of the present disclosure extend to optical fibers which have a different number of microstructures in the ring of microstructures which is closest to (i.e. immediately adjacent to) the core region.

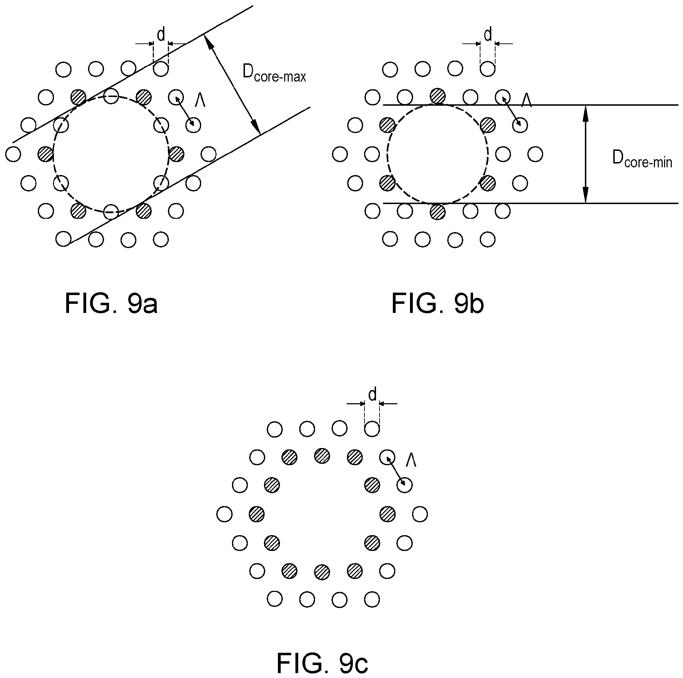

In another example, the ring of microstructures which is closest to (i.e. immediately adjacent to) the core region has twelve microstructures. In some implementations (such as the example whereby the ring of microstructures which is closest the core region has twelve microstructures) the core region has a maximum extent (as illustrated in Figure 9a), and a minimum extent (as illustrated in Figure 9b), and the diameter of the core region $D_{core}$ is defined as the average of the maximum extent of the core region, and the minimum extent of the core region.

Figure 9a illustrates how the measurement of the diameter of the maximum extent of the core region $D_{core-max}$ is performed. The diameter of the maximum extent of the core region ($D_{core-max}$) corresponds to a distance between microstructures at opposing vertices of the hexagonal ring of microstructures which is closest to (i.e. immediately adjacent to) the core region. Microstructures at vertices of the hexagonal ring of microstructures which may be used in the calculation of $D_{core-max}$ are shown in Figure 9a by way of a crosshatch pattern. The diameter of the maximum extent of the core region $D_{core-max}$ is given by:

$$D_{core-max} = 4\Lambda - d$$

Figure 9b illustrates how the measurement of the diameter of the minimum extent of the core region $D_{core-min}$ is performed. The diameter of the minimum extent of the core region ($D_{core-min}$) corresponds to a distance between microstructures at opposing sides of the hexagonal ring of microstructures which is closest to (i.e. immediately adjacent to) the core region. Microstructures at sides of the hexagonal ring of microstructures which may be used in the calculation of $D_{core-min}$ are shown in Figure 9b by way of a crosshatch pattern. The diameter of the minimum extent of the core region $D_{core-min}$ is given by:

$$D_{core-min} = 2\sqrt{3}\Lambda - d$$

Figure 9c illustrates how the measurement of the diameter of the core region $D_{core}$ is performed when the core region has a maximum extent and a minimum extent. As illustrated in Figure 9c, microstructures at both vertices and sides of the hexagonal ring of microstructures which are used in the calculation of $D_{core}$ are shown in Figure 9c by way of a crosshatch pattern. The diameter of the core region $D_{core}$ is given by:

$$D_{core} = \left(2 + \sqrt{3}\right)\Lambda - d$$

The diameter of the core region $D_{core}$ may be less than or equal to 3 μm. The diameter of the core region $D_{core}$ may be in a range of 2-3 μm, optionally in a range of 2.1-2.6 μm.

The geometric design of the fiber, and the dimensions (such as the pitch Λ, microstructure diameter d, and diameter of the core region $D_{core}$) play a significant role in attaining the all-normal dispersion profile of the optical fiber 10.

The optical fiber 10 may be either a polarization-maintaining (PM) fiber or a non-PM fiber. A PM fiber is a fiber in which linear polarization can be maintained if linearly polarized light is launched into the fiber. Advantageously the launched polarized light maintains a linear polarization during propagation along the PM delivery fiber and exits the fiber in a linear polarization state.

In embodiments of the present invention, a PM PCF 10 may be achieved by incorporating stress elements (e.g. stress rods) into the fiber. The stress elements are included in the cladding region and are enclosed by the background material 12 in the cladding region. The stress elements extend from an input end of the fiber along a longitudinal axis (in the z-direction) of the fiber to an output end of the fiber. The stress elements induce a stress in the core region (providing birefringence). The stress elements may have any appropriate cross-sectional shape such as circular, triangular, quadratic, polygonal e.g. hexagonal, elliptical, etc.

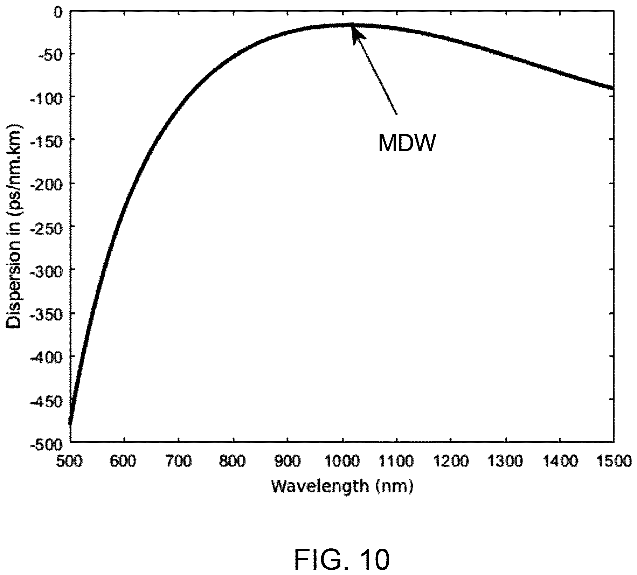

Figure 10 illustrates an all-normal dispersion profile of an example optical fiber 10. The all-normal dispersion profile illustrated in Figure 10 is of an optical fiber 10 designed for a MDW at 1027 nm, with a core diameter $D_{core}$ of 2.3 $\mu$m, having 5 air-hole rings, whereby the air-holes have a pitch of 1.44 $\mu$m, normalized inclusion diameter (d/A) of 0.39, with the air-holes each having a diameter of 0.5616 $\mu$m. It will be appreciated that the specific parameter specified above for the optical fiber 10 are merely examples. In this particular example, the optical fiber 10 has a MDW at 1027 nm at which it exhibits a dispersion of -17 ps/(nm*km). The optical fiber 10 may have a dispersion value at a MDW between -1 ps/(nm*km) and -100 ps/(nm*km), optionally between -1 ps/(nm*km) and -50 ps/(nm*km).

The broadband light source assembly 100 according to embodiments of the present invention may be configured to generate broadband radiation (output by the optical fiber 10) in a wavelength range of at least 500-900 nm. The lower bound for this broadband radiation wavelength range may be at least 100 nm, at least 200 nm, at least 300 nm, or at least 400 nm. The upper bound for this broadband radiation wavelength range may be 2000 nm or less, 1800 nm or less, 1500 nm or less, or 1200 nm or less. In one example, the broadband light source assembly 100 is configured to generate broadband radiation in a wavelength range of 485-1800 nm.

Broadband radiation may be radiation that spans across a wavelength range significantly larger than narrowband or single wavelength radiation. Broadband radiation comprises a continuous, or substantially continuous range of wavelengths. A range of wavelengths may also referred to as a spectrum/spectral range. The continuous range of wavelengths may be over a range of at least 10 nm, 20 nm, 50nm, 100 nm, 200nm, 400nm or more. The broadband radiation may have gaps in the wavelength range. These gaps may separate one or more continuous sub ranges within the wavelength range. A substantially continuous range may have discrete wavelength(s) and/or narrow wavelength band(s) missing from the range, and still be considered continuous. The power spectral density may be non-continuous, the power may vary across the broadband wavelength range.

The broadband radiation may comprise supercontinuum radiation. The supercontinuum radiation may comprise for example electromagnetic radiation over a wavelength range of 500-900 nm. The lower bound for this supercontinuum radiation wavelength range may be at least 100 nm, at least 200 nm, at least 300 nm, or at least 400 nm. The upper bound for this supercontinuum radiation wavelength range may be 2000 nm or less, 1800 nm or less, 1500 nm or less, or 1200 nm or less. In one example, the broadband light source assembly 100 is configured to generate supercontinuum radiation in a wavelength range of 485-1800 nm. The supercontinuum radiation may comprise white light.

It will be understood by the skilled person that a "supercontinuum" according to the present disclosure refers generally to a continuous spectral power distribution that exhibits substantial flatness. In some examples, the supercontinuum comprises a continuous spectral power distribution over a wavelength range of at least 100 nm. In some examples, the flatness of the supercontinuum corresponds to a peak to trough spectral power ratio of less than 100:1, or 20 dB. In some examples, the flatness of the supercontinuum corresponds to a peak to trough spectral power ratio of less than 10:1, or 10 dB.

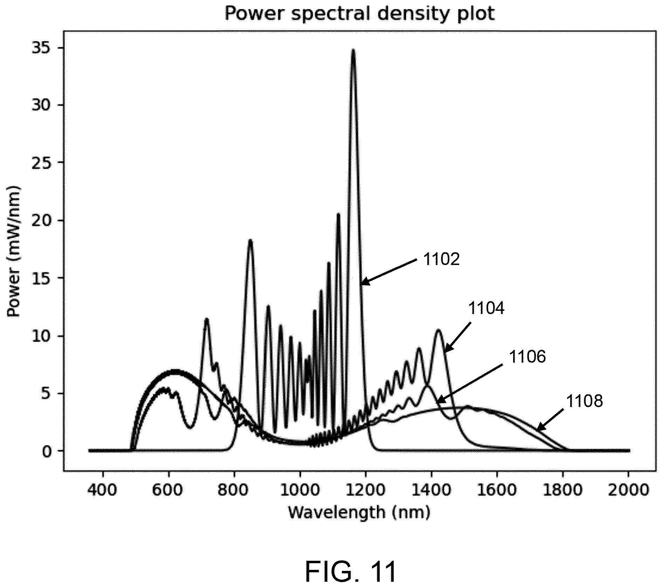

The dispersion profile of the optical fiber 10, along with the nonlinearity of the background material 12 (e.g. glass) of the optical fiber 10, determines the physics that underplay white light generation. The inherent mechanism that leads to white light generation in the broadband light source assembly 100 is self-phase modulation leading to optical wave-breaking. Figure 11 shows spectrally broadened plots of white light generated at different cross-sections of fiber lengths showing the evolution of white light spectra leading to the broadest white light generation. In Figure 11, these mechanisms can be identified by characteristic self-phase modulation fringes around the pump wavelength (which in this example was 1027 nm), followed by smooth optical wavebreaking (for the widest spectra shown). The waveform 1102 is a plot of radiation generated at a distance of 0.5cm from the input end of the optical fiber 10 into which the pulses of radiation emitted by the femtosecond pump laser 20 are supplied. The waveform 1104 is a plot of radiation generated at a distance of 1.5cm from the input end of the optical fiber 10. The waveform 1106 is a plot of radiation generated at a distance of 3.75cm from the input end of the optical fiber 10. The waveform 1108 is a plot of radiation generated at a distance of 12.75cm from the input end of the optical fiber 10. As shown in Figure 11, the spectrum of radiation generated along the fiber gets broader as the distance from the input end of the optical fiber 10 increases.

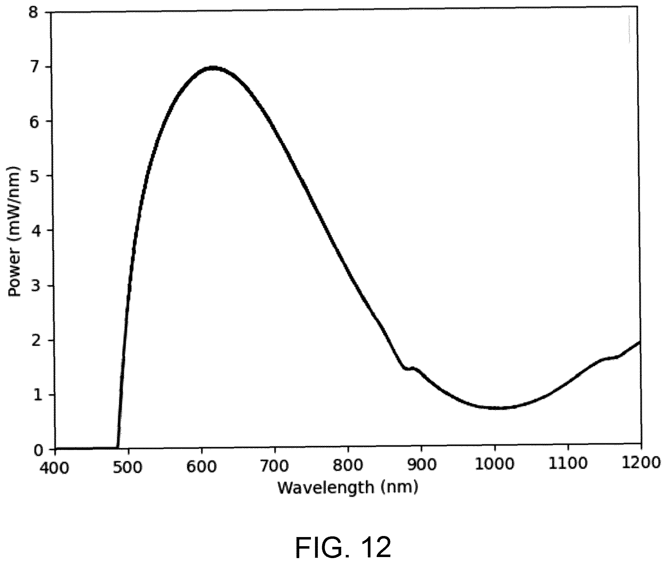

The broadband radiation output by the optical fiber 10 may have a power spectral density of at least 3 mW/nm in a wavelength band of 500-900 nm. Figure 12 depicts a power spectral density plot of radiation that may be generated by a broadband light source assembly according to embodiments of the present invention. The power spectral density plot on Figure 12 was obtained using a femtosecond pump laser 20 configured to emit pulses of radiation having a pulse duration of 150 fs centered at 1027 nm with 100 nJ of pump energy. The power spectral density plot on Figure 12 was obtained using an optical fiber 10 designed for MDW at 1027 nm, with a core diameter $D_{core}$ of 2.3 $\mu$m, having 5 air-hole rings, whereby the air-holes have a pitch of 1.44 $\mu$m, normalized inclusion diameter (d/A) of 0.39, with the air-holes each having a diameter of 0.5616 $\mu$m. It will be appreciated that the specific parameter specified above for both the femtosecond pump laser 20 and the optical fiber 10 are merely examples. It may be observed that the spectrum may drop below 3 mW/nm in a long wavelength range (e.g. 800-900 nm), this is illustrated in Figure 12. However, this can be easily increased to cross 3mW/nm for the long wavelength range by slight varying the input energy of the pulses of radiation emitted by the femtosecond pump laser 20.

As noted above, the radiation generated by the optical fiber 10 has lower levels of relative intensity noise (RIN) than known light source assemblies which are based on solitonic and modulation instability (MI) seeded processes. It should be noted that RIN and dose noise are different. RIN is pulse-to-pulse fluctuations in power and is caused by the physics of whitelight generation. It is independent of the repetition rate of the laser. On the other hand, dose noise, which is power fluctuation per exposure dose is closely linked to acquisition time of the sensor and repetition rate of the laser, $f_{RR}$. It scales as

$$\text{Dose Noise} = \text{RIN}/\sqrt{f_{RR}}$$ and determines the signal-to-noise ratio and ultimately OPO.

Whilst the particular structure of an example all-normal dispersion optical fiber has been described above, it will be appreciated that embodiments extend to other implementations of an all-normal dispersion optical fiber.

Further embodiments have been described in the following list of numbered clauses:

1. A broadband light source assembly comprising:

a femtosecond pump laser arranged to emit pulses of radiation, wherein the pulses of radiation have an energy per pump pulse of greater than 50 nJ; and
an all-normal dispersion optical fiber arranged to receive the pulses of radiation.

2. A broadband light source assembly of clause 1 wherein the optical fiber comprises:

a core region; and
a cladding region surrounding the core region; wherein the core region and the cladding region comprise a material having a first refractive index, the cladding region additionally comprising a plurality of microstructures extending from an input end of the optical fiber along a longitudinal axis of the optical fiber to an output end of the optical fiber, the plurality of microstructures (i) arranged in a cross-sectional pattern comprising at least one ring of microstructures surrounding the core region, and (ii) having a second refractive index which is less than the first refractive index.

3. A broadband light source assembly of clause 2, wherein the plurality of microstructures are hollow.

4. A broadband light source assembly of clause 3, wherein the plurality of microstructures are air-filled.

5. A broadband light source assembly of any of clauses 2 to 4, wherein a ratio between a diameter of each of the microstructures and a pitch of the microstructures is in a range of 0.33-0.45, optionally in a range of 0.36-0.42.

6. A broadband light source assembly of any clauses 2 to 5, wherein the cross-sectional pattern comprises a plurality of rings of microstructures surrounding the core region.

7. A broadband light source assembly of clause 6, wherein the cross-sectional pattern comprises at least three rings of microstructures surrounding the core region, optionally at least four rings of microstructures surrounding the core region, optionally at least five rings of microstructures surrounding the core region.

8. A broadband light source assembly of any of clauses 2 to 7, wherein a ring of microstructures immediately adjacent to the core region has six microstructures.

9. A broadband light source assembly of any of clauses 2 to 8, wherein each of the at least one ring of microstructures has a hexagonal shape.

10. A broadband light source assembly of any of clauses 2 to 9, wherein said core region has a diameter less than or equal to 3 $\mu$m.

11. A broadband light source assembly of any of clauses 2 to 10, wherein the material having the first refractive index comprises silica.

12. A broadband light source assembly of any preceding clause, wherein a length of the optical fiber is less than 10cm, optionally less than 5cm.

13. A broadband light source assembly of any preceding clause, wherein the pulses of radiation have an energy per pump pulse of at least 75 nJ, optionally at least 100 nJ.

14. A broadband light source assembly of any preceding clause, wherein the pulses of radiation comprises radiation have a central pump wavelength in a range of 700-1800 nm.

15. A broadband light source assembly of any preceding clause, wherein the pulses of radiation have a peak power of at least 200kW, optionally at least 300kW, optionally at least 400kW, optionally at least 500kW, optionally at least 600kW.

16. A broadband light source assembly of any preceding clause, wherein said optical fiber generates broadband radiation in a wavelength range of 500-900 nm, optionally in a wavelength range of 500-1200 nm, optionally in a wavelength range of 500-1500 nm, optionally in wavelength range of 500-1800 nm, optionally in wavelength range of 485-1800 nm.

17. A broadband light source assembly of clause 16, wherein the broadband radiation has a power spectral density of at least 3 mW/nm in a wavelength band of 500-900 nm.

18. A broadband light source assembly of any preceding clause, wherein said optical fiber has a dispersion value, at a minimum dispersion wavelength, between -1 ps/(nm*km) and -100 ps/(nm*km).

19. A broadband light source assembly of any preceding clause, wherein the pulses of radiation have a pulse duration in a range of 10-500 fs.

20. A lithographic apparatus comprising the broadband light source assembly of any preceding clause.

21. A metrology apparatus comprising the broadband light source assembly of any of clauses 1 to 19.

22. A method for generating broadband radiation, the method comprising providing pulses of radiation emitted from a femtosecond pump laser to an all-normal dispersion optical fiber, wherein the pulses of radiation have an energy per pump pulse of greater than 50 nJ, the optical fiber outputting the broadband radiation.

A broadband light source assembly in accordance with any of the embodiments described herein may be used in a lithographic apparatus LA such as that depicted in Figure 1. Although specific reference may be made in this text to employing a lithographic apparatus used in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. For example, the broadband light source assembly may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions. That is, a broadband light source assembly in accordance with any of the embodiments described herein may be used in a metrology apparatus such as that depicted in Figure 4. A broadband light source assembly in accordance with any of the embodiments described herein may be used in a level sensor LS such as that depicted in Figure 5. A broadband light source assembly in accordance with any of the embodiments described herein may be used in an alignment sensor such as that depicted in Figure 6.

Although specific reference may have been made above to the use of embodiments of the invention in the context of optical lithography, it will be appreciated that the invention, where the context allows, is not limited to optical lithography and the broadband light source assembly may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

**Claims**

1.  A broadband light source assembly comprising:

    a femtosecond pump laser arranged to emit pulses of radiation, wherein the pulses of radiation have an energy per pump pulse of greater than 50 nJ; and
    an all-normal dispersion optical fiber arranged to receive the pulses of radiation.

2.  A broadband light source assembly of claim 1 wherein the optical fiber comprises:

    a core region; and
    a cladding region surrounding the core region; wherein the core region and the cladding region comprise a material having a first refractive index, the cladding region additionally comprising a plurality of microstructures extending from an input end of the optical fiber along a longitudinal axis of the optical fiber to an output end of the optical fiber, the plurality of microstructures (i) arranged in a cross-sectional pattern comprising at least one ring of microstructures surrounding the core region, and (ii) having a second refractive index which is less than the first refractive index.

3.  A broadband light source assembly of claim 2, wherein the plurality of microstructures are hollow.

4.  A broadband light source assembly of claim 3, wherein the plurality of microstructures are air-filled.

5.  A broadband light source assembly of any of claims 2 to 4, wherein a ratio between a diameter of each of the microstructures and a pitch of the microstructures is in a range of 0.33-0.45, optionally in a range of 0.36-0.42.

6.  A broadband light source assembly of any claims 2 to 5, wherein the cross-sectional pattern comprises a plurality of rings of microstructures surrounding the core region.

7.  A broadband light source assembly of any of claims 2 to 6, wherein a ring of microstructures immediately adjacent to the core region has six microstructures.

8.  A broadband light source assembly of any of claims 2 to 7, wherein said core region has a diameter less than or equal to 3 $\mu$m.

9.  A broadband light source assembly of any of claims 2 to 8, wherein the material having the first refractive index comprises silica.

10. A broadband light source assembly of any preceding claim, wherein a length of the optical fiber is less than 10cm, optionally less than 5cm.

11. A broadband light source assembly of any preceding claim, wherein the pulses of radiation have a peak power of at least 200kW.

12. A broadband light source assembly of any preceding claim, wherein said optical fiber has a dispersion value, at a minimum dispersion wavelength, between -1 ps/(nm*km) and -100 ps/(nm*km).

13. A broadband light source assembly of any preceding claim, wherein the pulses of radiation have a pulse duration in a range of 10-500 fs.

14. A metrology apparatus comprising the broadband light source assembly of any of claims 1 to 13.

15. A method for generating broadband radiation, the method comprising providing pulses of radiation emitted from a femtosecond pump laser to an all-normal dispersion optical fiber, wherein the pulses of radiation have an energy per pump pulse of greater than 50 nJ, the optical fiber outputting the broadband radiation.

FIG. 1

FIG. 2

FIG. 3

SM1

Z

X

2

4

PU

W

I

6

λ

Z

8

X

## FIG. 4

LS

LSO

LSP

LSD

LSB

PGR

DET

DGR

BE1

ANG

BE2

MLO

W

Z

X

## FIG. 5

FIG. 6

FIG. 7

FIG. 8

FIG. 9a

FIG. 9b

FIG. 9c

FIG. 10

FIG. 11

FIG. 12

Europäisches
Patentamt

European
Patent Office

Office européen
des brevets

## EUROPEAN SEARCH REPORT

**Application Number**

**EP 23 20 2487**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | L E Hooper ET AL: "Coherent supercontinuum generation in photonic crystal fiber with all-normal group velocity dispersion References and links 6 / OPTICS EXPRESS 4902", Nature Opt. Lett. Appl. Phys. B Opt. Lett. Opt. Lett. Opt. Express Nature Opt. Lett. Rev. Mod. Phys. J. Opt. Soc. Am. B Phys. Rev. Lett. J. Opt. Soc. Am. B Opt. Express OSA March Opt. Express J. Opt. Soc. Am. B Opt. Express J. Opt. Soc. Am. B Opt. Le, 1 March 2011 (2011-03-01), pages 847-851, XP055632639, Retrieved from the Internet: URL:https://www.osapublishing.org/DirectPD FAccess/42B7CFEB-03FB-6233-0F3137FF2F2F942 C_210527/oe-19-6-4902.pdf?da=1&id=210527&s eq=0&mobile=no * chapter 2 and 3 * * the whole document * | 1-15 | INV. G02F1/35 G02F1/365 |
| X | SUKHOIVANOV IGOR A ET AL: "Design of All-Normal Dispersion Microstructured Optical Fiber on Silica Platform for Generation of Pulse-Preserving Supercontinuum Under Excitation at 1550 nm", JOURNAL OF LIGHTWAVE TECHNOLOGY, IEEE, USA, vol. 35, no. 17, 1 September 2017 (2017-09-01), pages 3772-3779, XP011657396, ISSN: 0733-8724, DOI: 10.1109/JLT.2017.2652379 [retrieved on 2017-07-20] * page 3778, left column, 2nd paragraph * * the whole document * -----  -/-- | 1-15 | TECHNICAL FIELDS SEARCHED (IPC)  G02F |

The present search report has been drawn up for all claims

| Place of search | Date of completion of the search | Examiner |
|---|---|---|
| The Hague | 7 March 2024 | Gill, Richard |

EPO FORM 1503 03.82 (P04C01)

**page 1 of 2**

Europäisches
Patentamt

European
Patent Office

Office européen
des brevets

## EUROPEAN SEARCH REPORT

Application Number

EP 23 20 2487

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KNIGHT J C ET AL: "Hollow-core photonic crystal fibres for delivery and compression of ultrashort optical pulses", OPTICAL AND QUANTUM ELECTRONICS, KLUWER ACADEMIC PUBLISHERS, BO, vol. 39, no. 12-13, 13 November 2007 (2007-11-13), pages 1047-1056, XP019612803, ISSN: 1572-817X * abstract * ----- | 1-15 | |

TECHNICAL FIELDS
SEARCHED (IPC)

The present search report has been drawn up for all claims

| Place of search | Date of completion of the search | Examiner |
|---|---|---|
| The Hague | 7 March 2024 | Gill, Richard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .........................................................................
& : member of the same patent family, corresponding
    document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6952253 B
- US 20100328655 A
- US 2011102753 A1
- US 20120044470 A
- US 20110249244 A
- US 20110026032 A
- EP 1628164 A
- US 451599
- US 11708678 B
- US 12256780 B
- US 12486449 B
- US 12920968 B
- US 12922587 B

- US 13000229 B
- US 13033135 B
- US 13533110 B
- US 13891410 B
- WO 2011012624 A
- US 20160161863 A
- US 20160370717 A1
- US 7265364 B
- US 7646471 B
- US 2010233600 A1
- WO 2016102127 A1
- US 6961116 B
- US 2015261097 A1